# EUROPEAN PATENT SPECIFICATION

(11) **EP 0 488 706 B1**
(45) Date of publication and mention of the grant of the patent: **28.08.1996**
(21) Application number: 91310981.5
(22) Date of filing: 28.11.1991
(51) Int. Cl.: H04L 12/00

(54) **Transmission line selection system**
System zur Auswahl von Übertragungsleitungen
Système pour sélectionner une ligne de transmission

(30) Priority: 28.11.1990 JP 323099/90
(43) Date of publication of application: 03.06.1992
(73) Proprietor: FUJITSU LIMITED, Kawasaki-shi, Kanagawa 211 (JP)
(72) Inventor: Ishiwata, Yoshiharu, c/o Fujitsu Limited, Kawasaki-shi, Kanagawa 211 (JP)
(74) Representative: Fane, Christopher Robin King

(56) References cited:
- EP-A- 0 343 611
- EP-A- 0 358 408
- WO-A-86/02751

## Description

### BACKGROUND OF THE INVENTION

The present invention generally relates to transmission line selection systems, and more particularly to a transmission line selection system which selects an optimum transmission line for a data transfer of an application in a data processing system which is coupled to a communication network via a plurality of transmission lines.

Conventionally, a large scale data processing system is coupled to a communication network via a plurality of transmission lines so that processed data can be transferred to another processing system. In addition, the transmission line to be used out of such transmission lines is determined for each application which makes a data transfer to the other processing system via the communication network.

The transmission line to be used for the data transfer by the conventional data processing system is fixedly assigned at the time when the data processing system is designed for each application. In other words, the application determines the transmission line to be used for the data transfer.

For this reason, when a plurality of applications which are executed simultaneously have the same transmission lines assigned thereto, the capacity of the transmission line required for the data transfer by the newly executed application becomes insufficient. As a result, there is a problem in that it becomes necessary for the newly executed application to wait until the execution of the other applications is completed or, to use the transmission line in a state where the transfer efficiency is poor.

On the other hand, the application can only use the transmission line which is assigned thereto even if the transmission quality of this transmission line is poor, and there is thus a problem in that the application must use the assigned transmission line even if the transfer efficiency of this transmission line is poor.

A known transmission line selection system, described in WO-A-86/02751, is suitable for selecting a transmission line to be used for data transfer from a first data processing system to a second data processing system that is coupled to the first data processing system via a communication network which includes a plurality of transmission lines. The said first data processing system is operable selectively to process a plurality of different applications, and the transmission line selection system includes selector means for selecting, in response to a data transfer request made by one of the applications, which one of the said transmission lines is to be used by the application concerned for such data transfer from the first data processing system to the second data processing system.

In this transmission line selection system, when a terminal of the first data processing system is activated to perform a particular task (application) it establishes a link with the selector means and transmits to the selector means information identifying the type of task concerned. The selector means then transmit back to the terminal information relating to the traffic route (transmission line) to be allocated in the network to enable transfer of data from the terminal to a computer, capable of performing the task, in the second data processing system.

However, the criteria used in the system concerned to select the traffic route (transmission line) are not described and it is not disclosed that the selected route should be an optimum one in any particular respects.

A transmission line selection system according to the present invention is characterised by: first storage means for storing data related to the transmission lines which can be used for data transfer from the first data processing system to the second data processing system; second storage means for storing data related to request conditions required for such data transfer by each of the said applications that can be processed by the first data processing system; and third storage means for storing data related to the status of each of the said transmission lines; and in that the said selector means are coupled to the first, second and third storage means and are operative to employ the data stored in the said first, second and third storage means when selecting the transmission line to be used, thereby to enable selection, based on that stored data, of an optimum transmission line for the application concerned.

In such a transmission line selection system, it is possible to carry out the data transfer with a high efficiency, and it is therefore possible to minimise the processing time of the data processing system. In addition, the load will not concentrate on a particular transmission line. Even in a case where the load is concentrated on a certain transmission line, the concentration is an optimum one for that particular time, and the data transfer can be carried out efficiently. Furthermore, even if a failure or a condition like a failure occurs on a specific transmission line, this specific transmission line is automatically excluded from the group of candidates when selecting the optimum transmission line, and the data transfer is efficient also from this point of view.

Other objects and further features of the present invention will be apparent from the following detailed description when read in conjunction with the accompanying drawings.

### BRIEF DESCRIPTION OF THE DRAWINGS

FIG.1 is a system block diagram for explaining the operating principle of a transmission line selection system according to the present invention;
FIG.2 is a system block diagram showing a first embodiment of the transmission line selection system according to the present invention;
FIG.3 is a diagram for explaining data stored in a first storage shown in FIG.2;
FIG.4 is a diagram for explaining data stored in a second storage shown in FIG.2;
FIG.5 is a diagram for explaining data stored in a third storage shown in FIG.2;
FIG.6 is a flow chart for explaining the operation of the first embodiment;
FIG.7 is a system block diagram showing a second embodiment of the transmission line selection system according to the present invention;
FIG.8 is a flow chart for explaining one operation of the second embodiment; and
FIG.9 is a flow chart for explaining another operation of the second embodiment.

### DESCRIPTION OF THE PREFERRED EMBODIMENTS

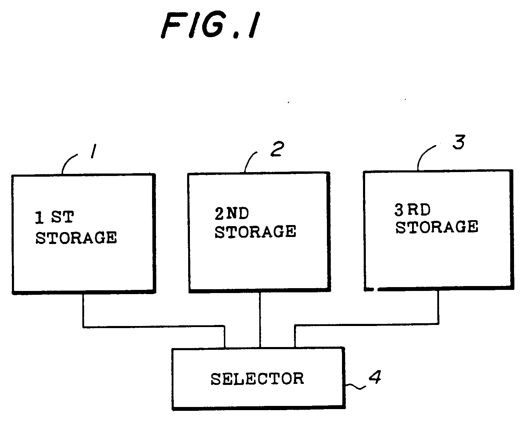

First, a description will be given of the operating principle of a transmission line selection system according to the present invention, by referring to FIG.1.

A transmission line selection system shown in FIG.1 includes a first storage 1, a second storage 2, a third storage 3 and a selector 4 which are connected as shown. The first through third storages 1 through 3 and the selector 4 form a part of a first data processing system. The first storage 1 stores names of transmission lines which are capable of transferring data between this first data processing system and a second data processing system. The second storage 2 stores request conditions which are required for the data transfer by application. The third storage 3 stores present status for each transmission line, such as the transmission capacity, the transmission capacity which is presently used and the data transfer quality. The selector 4 refers to the data stored in the first, second and third storages 1, 2 and 3, and selects an optimum transmission line based on the data.

When the execution of an application is started in the first data processing system and a data transfer request is generated, the selector 4 refers to the data stored in the first through third storages 1 through 3 and selects an optimum transmission line for the data transfer request. The data transfer can be made efficiently because the selector 4 selects the optimum transmission line based on the transmission lines which are capable of transferring data between this first data processing system and the second data processing system, the request conditions which are required for the data transfer by application, and the present status for each transmission line.

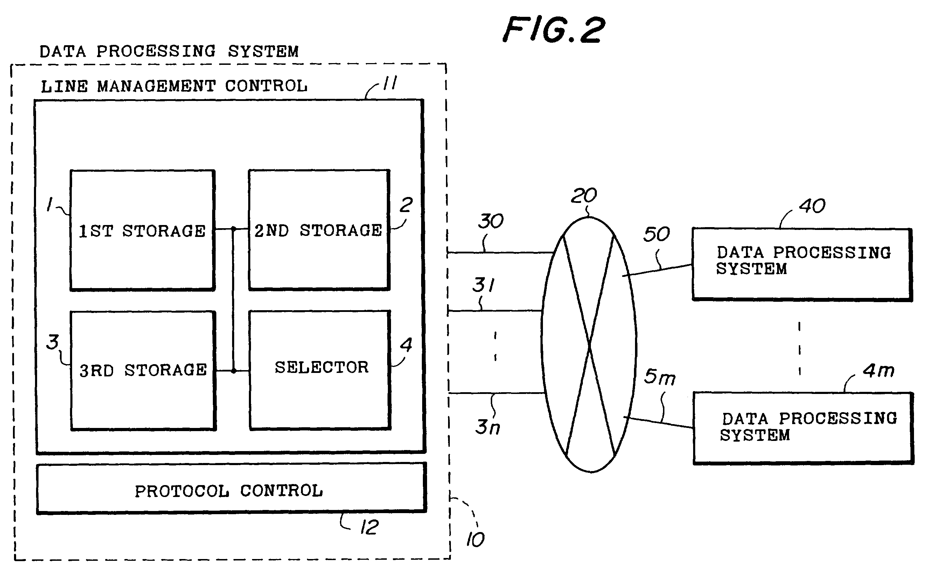

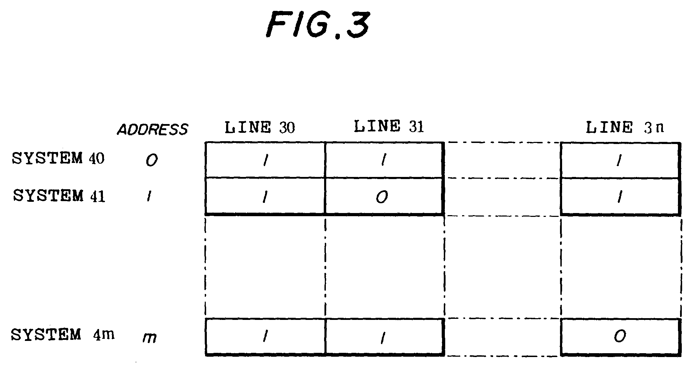

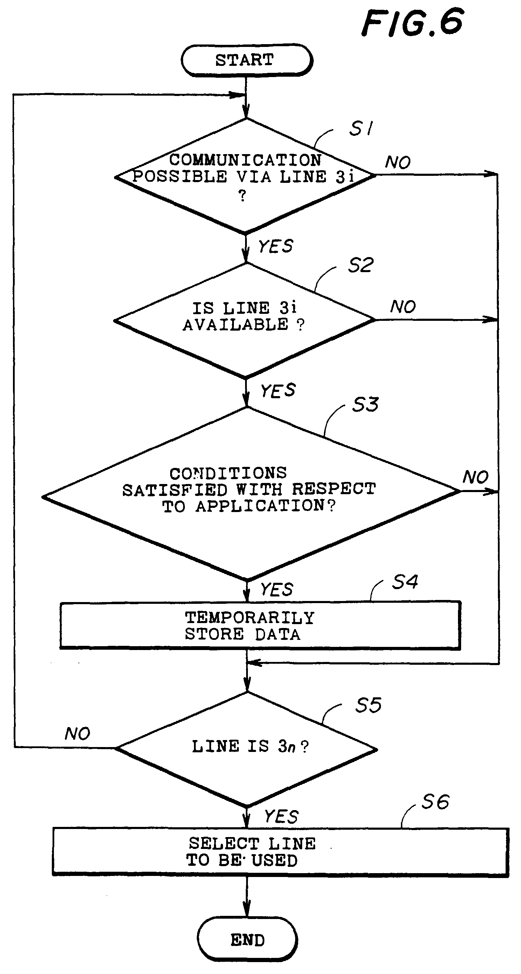

Next, a description will be given of a first embodiment of the transmission line selection system according to the present invention, by referring to FIG.2. In FIG.2, those parts which are basically the same as those corresponding parts in FIG.1 are designated by the same reference numerals, and a description thereof will be omitted. FIGS.3, 4 and 5 respectively are diagrams for explaining the data stored in the first, second and third storages 1, 2 and 3. FIG.6 is a flow chart showing the operation of the first embodiment.

A data processing system 10 includes a transmission line management control part 11, a protocol control part 12, a processor (not shown) for carrying a data processing, and various circuits (not shown) which are required to carry out other processes. The data processing system 10 is coupled to a communication network 20 via transmission lines 30, 31, ..., and 3n, and the transmission lines 30 through 3n may be used for the data transfer.

On the other hand, data processing systems 40, ..., 4m are coupled to the communication network 20 via transmission lines 50, ..., 5m, and the transmission lines 50 through 5m may be used for the data transfer.

The transmission line management control part 11 includes the first through third storages 1 through 3 and the selector 4 described above in conjunction with FIG.1. The transmission line management control part 11 controls the management of the transmission lines 30 through 3n and the selection of the transmission lines 30 through 3n.

The protocol control part 12 carries out a control with respect to the data processing system 40 or the like in conformance with a data transfer control procedure. In addition, the protocol control part 12 carries out a control between a control part (not shown) of the communication network 20, if necessary.

As shown in FIG.3, the first storage 1 is made up of memories 0 through n having addresses 0 through m. The addresses 0 through m respectively correspond to the data processing systems 40 through 4m to which the data transfer is made. The memories 0 through n respectively correspond to the transmission lines 30 through 3n. The memories 0 through n prestore data related to the transmission lines which may be used for the data transfer between the data processing system 10 and the data processing systems 40 through 4m. In FIG.3, the prestored data "1" indicates that the corresponding transmission line can be used for the data transfer, and the prestored data "0" indicates that the corresponding transmission line cannot be used for the data transfer.

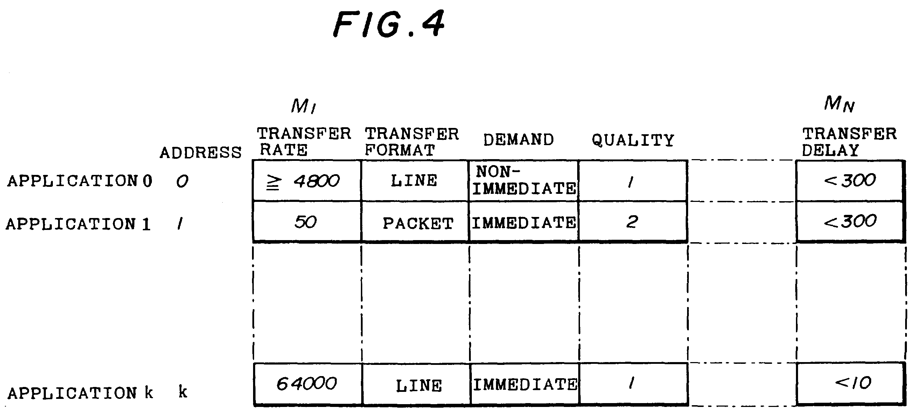

As shown in FIG.4, the second storage 2 is made up of memories M₁ through M_{N} having addresses 0 through k. The addresses 0 through k respectively correspond to the applications 0 through k. The memories M₁ through M_{N} respectively prestore the items of request conditions required for the data transfer. For example, the items of the request conditions include the transfer rate, the transfer format, the demand, the data transfer quality, the transfer delay time and the like. In the case shown in FIG.4, the transfer rate is ≥ 4800 bps, the transfer format is line connection, the demand is non-immediate (that is, may be transferred at any time), the data transfer quality is 1, and the transfer delay time is 300 ms for the application 0. The data transfer quality may take a value 1, 2 or 3, where 1 denotes a quality better than normal, 2 denotes a normal quality and 3 denotes a quality poorer than normal.

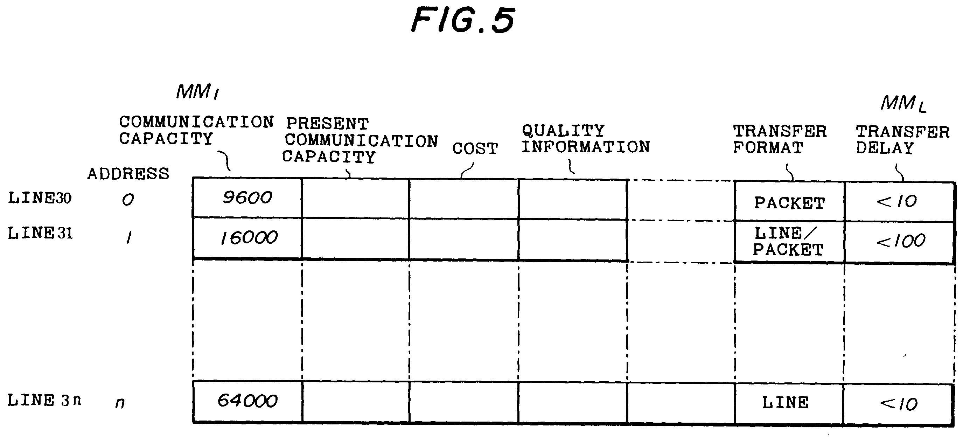

As shown in FIG.5, the third storage 3 is made up of memories MM₁ through MM_{L} having addresses 0 through n. The addresses 0 through n respectively correspond to the transmission lines 30 through 3n. The memories MM₁ through MM_{L} respectively store the items describing the status of the transmission line. For example, the items of the status include the maximum communication capacity of the transmission line, the communication capacity presently being used, the cost data, the data transfer quality information, the data transfer format and the like. The items such as the maximum communication capacity, the cost data and the data transfer format are prestored in the memories MM₁, MM₃ and MM_{L-1}. On the other hand, the items such as the communication capacity presently being used and the data transfer quality information are stored in the memories MM₂ and MM₄ when corresponding processing parts (not shown) of the data processing system 10 process such information.

Next, a description will be given of the selector 4. The selector 4 carries out a process shown in FIG.6. The process shown in FIG.6 is started when an application starts in the data processing system 10 and a data transfer request is transferred to the transmission line management control part 11.

In FIG.6, a step S1 makes a reference to the memories of the first storage 1 at the address corresponding to the data processing system to which a data transfer request is made, so as to decide whether or not communication via the transmission path 3i is possible based on the value (1 or 0) stored therein. Initially, i=0. If the decision result of the step S1 is NO, the process advances to a step S5. On the other hand, if the decision result in the step S1 is YES, a step S2 makes a reference to the memories of the third storage 3 at the address corresponding to the transmission line 3i, so as to decide whether or not the transmission line 3i can be used. The decision result in the step S2 is NO if the communication capacity which is presently used with the transmission line 3i is equal to the (full) communication capacity of this transmission line 3i, or if the transmission line 3i cannot be used due to a fault or the like. The process advances to the step S5 if the decision result in the step S2 is NO. But if the decision result in the step S2 is YES, the process advances to a step S3.

The step S3 makes a reference to the memories of the second storage 2 at the address corresponding to the application and to the memories of the third storage 3 at the address corresponding to the transmission line 3i, so as to decide whether or not the request conditions are satisfied with respect to the application. The decision of the step S3 is made by checking all of the request conditions, such as checking whether or not the data transfer rate of the application is smaller than the unused communication capacity of the transmission line 3i and checking whether or not the transfer delay time is satisfied. If the decision result in the step S3 is NO, the process advances to the step S5. On the other hand, the process advances to a step S4 if the decision result in the step S3 is YES.

The step S4 weights the items which are used to select the optimum transmission line and temporarily stores the weighted items in a memory (not shown). Of course, this memory and the first through third storages 1 through 3 may be a part of the same storage unit or alternatively this memory may be independent of the first through third storages 1 through 3. For example, the weighting is made by defining priorities of the items and successively putting numerical numbers 1, 2, 3, ... to the items starting from the item having the highest priority. The items which are temporarily stored may include the cost of transmission line, the utilization efficiency of transmission line, the data transfer quality, the transfer delay time and the like. The weighting described above is made for each of such items. The process advances to the step S5 after the step S4.

The step S5 decides whether or not the process described above was carried out with respect to the transmission line 3n, that is, whether or not the steps S1 through S4 were carried out for all of the transmission lines 30 through 3n. If the decision result in the step S5 is NO, i is incremented by one and the process returns to the step S1. On the other hand, the process advances to a step S6 if the decision result in the step S5 is YES.

The step S6 refers to the data which are temporarily stored in the step S5 and selects the optimum transmission line based on sums of the weighted data which are temporarily stored by item for each of the transmission lines 30 through 3n. If the sums of the weighted data are the same for two transmission lines, for example, priorities may be assigned for each item and the optimum transmission line may be selected based on the sums of the modified weighted data. If the numerical numbers 1, 2, 3, ... are successively assigned to the items starting from the item having the highest priority, the sum of the weighted data of the items for the optimum transmission line becomes a minimum.

When the optimum transmission line is selected by the selector 4, a communication line establishment means (not shown) of the data processing system 10 transmits a line establishment signal to the communication network 20 so as to establish a line with a concerned one of the data processing systems 10 through 4m using the selected optimum transmission line. When the line is established, the protocol control part 12 operates to transfer data with respect to the application between the data processing system 10 and the concerned data processing system.

Of course, the request conditions stored in the second storage 2 and the items stored in the third storage 3 are not limited to those of the above described embodiment, and the number of request conditions and items may be increased or decreased to suit the needs.

If a predetermined application of the data processing system 10 transfers a large amount of data at a fixed time, a processor (not shown) of the data processing system 10 may store in the third storage 3 data for reserving the transmission line which is to be used for transferring the large amount of data of the predetermined application when the fixed time for transferring the large amount of data approaches. When the transmission line is reserved in this manner, the reserved transmission line will not be selected for the applications other than the predetermined application. As a result, the large amount of data of the predetermined application can be transferred efficiently at the fixed time, thereby making it possible to reduce the processing time.

In the step S6 described above, the priorities of the items may be modified to suit the needs of the application concerned. For example, it is possible to select the optimum transmission line for the application by giving high priorities to the cost, the transfer quality and transfer delay time.

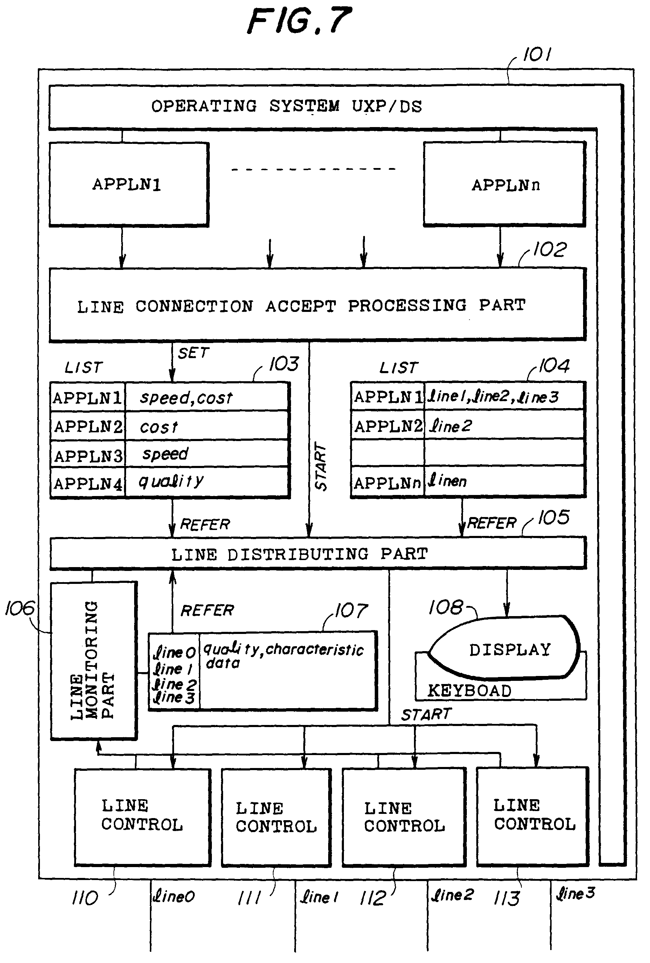

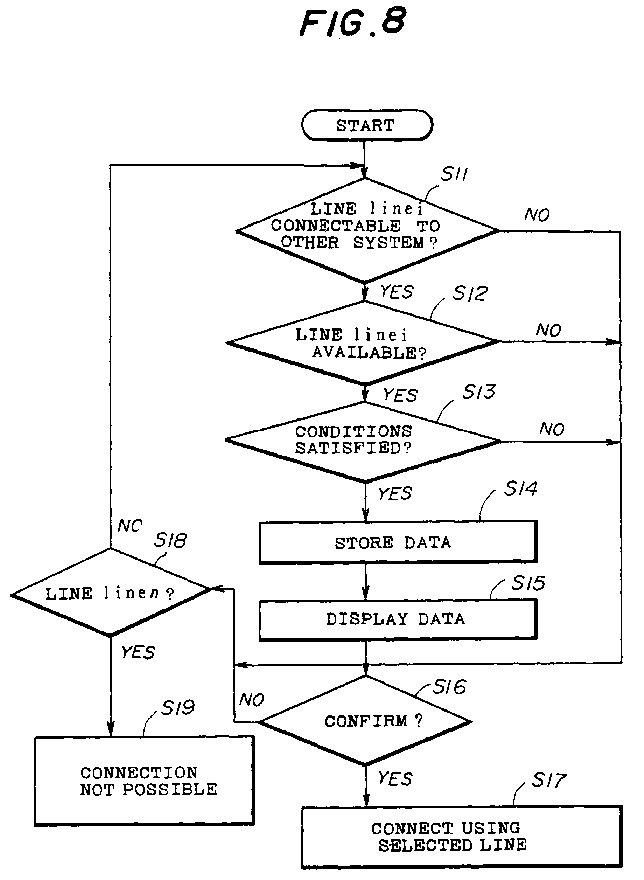

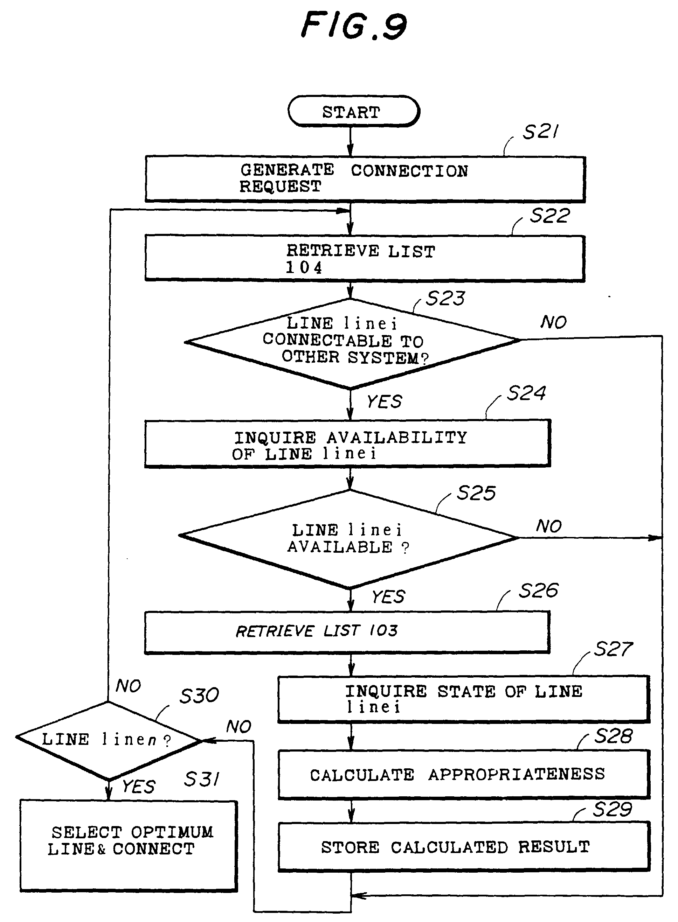

Next, a description will be given of a second embodiment of the transmission line selection system according to the present invention, by referring to FIGS.7 through 9. FIG.7 shows the second embodiment, and FIGS.8 and 9 are flow charts for explaining the operation of the second embodiment.

In FIG.7, the data processing system generally includes an operating system 101, applications APPLN1 through APPLNn, a line connection accept processing part 102, a list 103 of set conditions, a list 104 of physically connectable lines, a line distributing part 105, a line monitoring part 106, a list 107 of quality and characteristic data of each line, an operation part 108 including a keyboard and a display, for example, and line control parts 110 through 113.

The line connection accept processing part 102 accepts a connection request from the application APPLNi (i=1, ..., n) for connecting to the other data processing system, and stores the selection conditions and the like requested by the application APPLNi into the list 103. Thereafter, the line connection accept processing part 102 starts the line distributing part 105. The list 103 stores the line selection condition information requested by the application APPLNi.

The line distributing part 105 refers to the list 104 which stores the lines which are physically connectable for each of the applications APPLN1 through APPLNn, and makes a list of the lines which are physically connected to the data processing system shown in FIG.7, in order to connect to the other data processing system to which the connection request requests connection. In other words, the list 104 stores information indicating the other data processing systems to which each line of the data processing system shown in FIG.7 is connectable. The line distributing part 105 selects from this list of lines a line which most satisfies the set conditions stored in the list 103. Based on information related to this line selection, the line distributing part 105 starts each of the line control parts 110 through 113 which are respectively provided with respect to the four kinds of lines, that is, a leased line line0, a telephone line line1, a packet line line2 and an integrated services digital network (ISDN) line line3. The actual line connection is ordered by starting these line control parts 110 through 113.

In this embodiment, a communication network corresponding to the communication network 20 shown in FIG.2 has a structure that various kinds of lines line0 through line3 coexist within the communication network to which the data processing system is coupled.

The line monitoring part 106 forms and renews the quality and characteristic data of each line based on statistic information received from each of the line control parts 110 through 113. The quality and characteristic data are stored in the list 107, and the line distributing part 105 makes a reference to this list 107 when making the line selection. The line control parts 110 through 113 respectively make the actual connection process with respect to the corresponding lines line0 through line3.

FIG.8 generally shows an embodiment of the transmission line selection process of the second embodiment, including the operation by the operator. In FIG.8, a step S11 decides whether or not a line linei (i=0, ..., 3 in this case) is connectable to the other data processing system, by referring to the list 104. If the decision result in the step S11 is YES, a step S12 decides whether or not the line linei is usable (that is, available) based on the state of the lines line0 through linen (n=3 in this case) monitored by the line monitoring part 106. If the decision result in the step S12 is YES, a step S13 decides whether or not the conditions requested by the application APPLNj are satisfied, by referring to the list 103, where j is arbitrarily selected from 1 to n. A step S14 temporarily stores the data related to the available line linei if the decision result in the step S13 is YES. For example, the data may be stored temporarily in a storage unit (not shown) which stores at least one of the lists 103, 104 and 107 or in an independent storage unit (not shown). A step S15 displays the conditions of the available line linei on the display of the operation part 108, and a step S16 decides whether or not the operator has confirmed via the keyboard of the operation part 108 the use of the available line linei the data of which are displayed. If the decision result in the step S16 is YES, a step S17 connects the data processing system shown in FIG.7 to the confirmed available line linei so as to connect to the other data processing system.

On the other hand, if the decision result in the step S16 is NO, a step S18 decides whether or not the available line linei is the line linen (n=3 in this case). The step S18 is carried out also when the decision result in any one of the steps S11, S12 and S13 is NO. If the decision result in the step S18 is YES, a step S19 detects that a connection is not possible. On the other hand, the process returns to the step S11 if the decision result in the step S18 is NO.

FIG.9 generally shows another embodiment of the transmission line selection process of the second embodiment. In FIG.9, a step S21 generates a connection request by the application APPLNj. A step S22 starts retrieving the contents of the list 104 which indicate the lines which are physically connectable. Then, a step S23 decides whether or not a transmission line linei (i=1, ..., 3 in this case) is connectable to the other data processing system. If the decision result in the step S23 is YES, a step S24 inquires of the line monitoring part 106 whether or not the connectable transmission line linei is available. A step S25 decides whether or not the connectable transmission line linei is available.

If the decision result in the step S25 is YES, a step S26 refers to the list 103 to retrieve the contents of the list 103. Thereafter, a step S27 inquires the line monitoring part 106 the state of the available transmission line linei. A step S28 calculates the degree of appropriateness of the available transmission line linei by taking into account the conditions specified by the application APPLNj. A step S29 temporarily stores the data related to the calculated result in a storage unit (not shown), and a step S30 decides whether or not the available transmission line linei is the transmission line linen (n=3 in this case). If the decision result in the step S30 is YES, a step S31 selects an optimum transmission line based on the data stored in the storage unit and makes the necessary connection via a corresponding one of the line control parts 110 through 113.

The step S30 is carried out also when the decision result in one of the steps S23 and S25 is NO. If the decision result in the step S30 is NO, the process returns to the step S22.

The present invention is not limited to these embodiments, but various variations may be made without departing from the scope of the present invention as defined in the appended claims.

## Claims

1. A transmission line selection system for selecting a transmission line to be used for data transfer from a first data processing system to a second data processing system that is coupled to the first data processing system via a communication network (20) which includes a plurality of transmission lines (30, 31, 3n), the said first data processing system being operable selectively to process a plurality of different applications, and the transmission line selection system including selector means (4) for selecting, in response to a data transfer request made by one of the applications, which one of the said transmission lines is to be used by the application concerned for such data transfer from the first data processing system to the second data processing system;
characterised by:
first storage means (1) for storing data related to the transmission lines which can be used for data transfer from the first data processing system to the second data processing system;
second storage means (2) for storing data related to request conditions required for such data transfer by each of the said applications that can be processed by the first data processing system; and
third storage means (3) for storing data related to the status of each of the said transmission lines;
and in that the said selector means (4) are coupled to the first, second and third storage means (1, 2, 3) and are operative to employ the data stored in the said first, second and third storage means when selecting the transmission line to be used, thereby to enable selection, based on that stored data, of an optimum transmission line for the application concerned.

2. The transmission line selection system as claimed in claim 1, characterised in that the transmission lines include different kinds of transmission lines.

3. The transmission line selection system as claimed in claim 2, characterised in that different kinds of transmission lines are selected from a group consisting of a leased line, a telephone line, a packet line and an integrated services digital network line.

4. The transmission line selection system as claimed in claim 1, characterised in that the transmission lines are of the same kind of transmission line selected from a group consisting of a leased line, a telephone line, a packet line and an integrated services digital network line.

5. The transmission line selection system as claimed in any of claims 1 to 4, characterised in that said second storage means (2) stores parameters indicating at least a transfer rate and a quality of the optimum transmission line to be used for each of the applications.

6. The transmission line selection system as claimed in claim 5, characterised in that said second storage means (2) further stores at least one further parameter indicating a kind of data selected from a group consisting of transfer format, demand and transfer delay of the optimum transmission line to be used for each of the applications.

7. The transmission line selection system as claimed in any of claims 1 to 6, characterized in that said third storage means (3) stores for each of the transmission lines at least one kind of data selected from a group consisting of maximum communication capacity, communication capacity presently being used, cost, quality information, transfer format and transfer delay.

8. The transmission line selection system as claimed in any of claims 1 to 7, characterized in that said selector means (4) includes first means for obtaining candidates of the optimum transmission line based on the data stored in said first, second and third storage means, and second means for automatically selecting the optimum transmission line from the candidates based on the data stored in said third storage means.

9. The transmission line selection system as claimed in claim 8, characterized in that said second means (2) weights each kind of data stored in said third storage means (3) by defining priorities of the kinds of data and selects the candidate having the highest priority as the optimum transmission line.

10. The transmission line selection system as claimed in any of claims 1 to 9, characterized in that said selector means (4) includes first means for displaying at least candidates of the optimum transmission line based on the data stored in said first, second and third storage means (1-3), and second means for manually selecting the optimum transmission line from the displayed candidates.

11. The transmission line selection system as claimed in claim 10, characterized in that said first means additionally displays the data stored in said third storage means (3) for each of the candidates.

## Patentansprüche

1. Übertragungsleitungsauswahlsystem zum Auswählen einer Übertragungsleitung, die zur Datenübertragung von einem ersten Datenverarbeitungssystem zu einem zweiten Datenverarbeitungssystem zu verwenden ist, welches über ein Kommunikationsnetz (20), welches eine Vielzahl von Übertragungsleitungen (30, 31, 3n) enthält, mit dem ersten Datenverarbeitungssystem verbunden ist, welches erste Datenverarbeitungssystem selektiv betätigbar ist, um eine Vielzahl von verschiedenen Anwendungen zu verarbeiten, und welches Übertragungsleitungsauswahlsystem eine Wähleinrichtung (4) enthält, die ansprechend auf eine von einer der Anwendungen durchgeführte Datenübertragungsanforderung auswählt, welche der Übertragungsleitungen durch die betreffende Anwendung für diese Datenübertragung von dem ersten Datenverarbeitungssystem zu dem zweiten Datenverarbeitungssytem zu verwenden ist,
gekennzeichnet durch:
eine erste Speichereinrichtung (1) zum Speichern von Daten bezüglich der Übertragungsleitungen, die zur Datenübertragung von dem ersten Datenverarbeitungssystem zu dem zweiten Datenverarbeitungssystem verwendet werden können;
eine zweite Speichereinrichtung (2) zum Speichern von Daten bezüglich der Anforderungsbedingungen, die für eine solche Datenübertragung von jeder der Anwendungen erforderlich sind, die von dem ersten Datenverarbeitungssystem verarbeitet werden können; und
eine dritte Speichereinrichtung (3) zum Speichern von Daten bezüglich des Status jeder der Übertragungsleitungen;
und dadurch, daß die Wähleinrichtung (4) mit der ersten, der zweiten und der dritten Speichereinrichtung (1, 2, 3) verbunden ist und so arbeitet, daß sie in der ersten, der zweiten und der dritten Speichereinrichtung gespeicherte Daten verwendet, wenn sie die zu verwendende Übertragungsleitung auswählt, wodurch basierend auf diesen gespeicherten Daten die Auswahl einer optimalen Übertragungsleitung für die betreffende Anwendung ermöglicht wird.

2. Übertragungsleitungsauswahlsystem nach Anspruch 1, dadurch gekennzeichnet, daß die Übertragungsleitungen verschiedene Arten von Übertragungsleitungen einschließen.

3. Übertragungsleitungsauswahlsystem nach Anspruch 2, dadurch gekennzeichnet, daß verschiedene Arten von Übertragungsleitungen aus einer Gruppe, bestehend aus einer gemieteten Leitung, einer Telefonleitung, einer Paketleitung und einer diensteintegrierenden digitalen Netzleitung ausgewählt werden.

4. Übertragungsleitungsauswahlsystem nach Anspruch 1, dadurch gekennzeichnet, daß die Übertragungsleitungen zu der selben Art von Übertragungsleitung gehören, ausgewählt aus einer Gruppe bestehend aus einer gemieteten Leitung, einer Telefonleitung, einer Paketleitung und einer diensteintegrierenden digitalen Netzleitung.

5. Übertragungsleitungsauswahlsystem nach einem der Ansprüche 1 bis 4, dadurch gekennzeichnet, daß die zweite Speichereinrichtung (2) Parameter speichert, die mindestens eine Übertragungsrate und eine Qualität der optimalen Übertragungsleitung, die für jede der Anwendungen zu verwenden ist, angeben.

6. Übertragungsleitungsauswahlsystem nach Anspruch 5, dadurch gekennzeichnet, daß die zweite Speichereinrichtung (2) ferner wenigstens einen weiteren Parameter speichert, der eine Art von Daten angibt, die ausgewählt sind aus einer Gruppe, die aus dem Übertragungsformat, der Abfrage und der Übertragungsverzögerung der für jede der Anwendungen zu verwendenden optimalen Übertragungsleitung besteht.

7. Übertragungsleitungsauswahlsystem nach einem der Ansprüche 1 bis 6, dadurch gekennzeichnet, daß die dritte Speichereinrichtung (3) für jede der Übertragungsleitungen wenigstens eine Art von Daten speichert, die ausgewählt ist aus einer Gruppe, die aus der maximalen Kommunikationskapazität, der gegenwärtig verwendeten Kommunikationskapazität, Kosten, Qualitätsinformation, Übertragungsformat und Übertragungsverzögerung besteht.

8. Übertragungsleitungsauswahlsystem nach einem der Ansprüch 1 bis 7, dadurch gekennzeichnet, daß die Wähleinrichtung (4) eine erste Einrichtung zum Erhalten von Kandidaten für die optimale Übertragungsleitung auf der Basis der in der ersten, der zweiten und der dritten Speichereinrichtung gespeicherten Daten und eine zweite Einrichtung zum automatischen Auswählen der optimalen Übertragungsleitung aus den Kandidaten auf der Basis der in der dritten Speichereinrichtung gespeicherten Daten enthält.

9. Übertragungsleitungsauswahlsystem nach Anspruch 8, dadurch gekennzeichnet, daß die zweite Einrichtung (2) jede Art von Daten, die in der dritten Speichereinrichtung (3) gespeichert sind, gewichtet, indem Prioritäten der Arten von Daten definiert werden, und den Kandidaten, der die höchste Priorität aufweist, als die optimale Übertragungsleitung auswählt.

10. Übertragungsleitungsauswahlsystem nach einem der Ansprüche 1 bis 9, dadurch gekennzeichnet, daß die Wähleinrichtung (4) eine erste Einrichtung zu Anzeigen wenigstens von Kandidaten für die optimale Übertragungsleitung auf der Basis der in der ersten, der zweiten und der dritten Speichereinrichtung (1 - 3) gespeicherten Daten und eine zweite Einrichtung zum manuellen Auswählen der optimalen Übertragungsleitung aus den angezeigten Kandidaten enthält.

11. Übertragungsleitungsauswahlsystem nach Anspruch 10, dadurch gekennzeichnet, daß die erste Einrichtung zusätzlich die in der dritten Speichereinrichtung (3) gespeicherten Daten für jeden Kandidaten anzeigt.

## Revendications

1. Système de sélection de ligne de transmission pour sélectionner une ligne de transmission à utiliser pour un transfert de données d'un premier système de traitement de données à un deuxième système de traitement de données qui est relié au premier système de traitement de données par l'intermédiaire d'un réseau de télécommunications (20) qui comprend une pluralité de lignes de transmission (30, 31, 3n), ledit premier système de traitement de données pouvant fonctionner sélectivement pour traiter une pluralité d'applications différentes, et le système de sélection de ligne de transmission comportant des moyens de sélection (4) pour sélectionner, en réponse à une demande de transfert de données émise par une des applications, celle desdites lignes de transmission qui est à utiliser par l'application concernée pour ce transfert de données du premier système de traitement de données au deuxième système de traitement de données,
caractérisé par:
- des premiers moyens de mémorisation (1) pour mémoriser des données relatives aux lignes de transmission qui peuvent être utilisées pour le transfert de données du premier système de traitement de données au deuxième système de traitement de données;
- des deuxièmes moyens de mémorisation (2) pour mémoriser des données relatives aux conditions de demande nécessaires pour effectuer un tel transfert de données par chacune desdites applications qui peuvent être traitées par le premier système de traitement de données; et
- des troisièmes moyens de mémorisation (3) pour mémoriser des données relatives à l'état de chacune desdites lignes de transmission;
- et en ce que lesdits moyens de sélection (4) sont reliés aux premiers, deuxièmes et troisièmes moyens de mémorisation (1, 2, 3) et sont opérants pour employer les données mémorisées dans chacun des premiers, deuxièmes et troisièmes moyens de mémorisation lors de la sélection de la ligne de transmission à utiliser pour permettre par ce moyen la sélection, sur la base de ces données mémorisées, de la ligne de transmission optimale pour l'application concernée.

2. Système de sélection de ligne de transmission selon la revendication 1, caractérisé en ce que les lignes de transmission comprennent différentes sortes de lignes de transmission.

3. Système de sélection de ligne de transmission selon la revendication 2, caractérisé en ce que différentes sortes de lignes de transmission sont sélectionnées dans un groupe composé d'une ligne louée, d'une ligne téléphonique, d'une ligne à paquets de données et d'une ligne d'un réseau numérique à intégration de services (RNIS).

4. Système de sélection de ligne de transmission selon la revendication 1, caractérisé en ce que les lignes de transmission sont de la même sorte de ligne de transmission sélectionnée dans un groupe composé d'une ligne louée, d'une ligne téléphonique, d'une ligne à paquets de données et d'une ligne d'un réseau numérique à intégration de services (RNIS).

5. Système de sélection de ligne de transmission selon l'une quelconque des revendications 1 à 4, caractérisé en ce que lesdits deuxièmes moyens de mémorisation (2) mémorisent des paramètres indiquant au moins une cadence de transfert et une qualité de la ligne de transmission optimale à utiliser pour chacune des applications.

6. Système de sélection de ligne de transmission selon la revendication 5, caractérisé en ce que lesdits deuxièmes moyens de mémorisation (2) mémorisent en outre au moins un autre paramètre indiquant une sorte de données sélectionnée dans un groupe composé d'un format de transfert, d'une demande et d'un retard de transfert de la ligne de transmission optimale pour être utilisé pour chacune des applicaticns.

7. Système de sélection de ligne de transmission selon l'une quelconque des revendications 1 à 6, caractérisé en ce que lesdits troisièmes moyens de mémorisation (3) mémorisent pour chacune des lignes de transmission au moins une sorte de données sélectionnée dans un groupe composé de la capacité maximale de transmission, de la capacité de transmission présentement utilisée, du coût, d'informations de qualité, du format de transfert et du retard de transfert.

8. Système de sélection de ligne de transmission selon l'une quelconque des revendications 1 à 7, caractérisé en ce que lesdits moyens de sélection (4) comprennent des premiers moyens pour obtenir des candidates pour la ligne de transmission optimale sur la base des données mémorisées dans lesdits premiers, deuxièmes et troisièmes moyens de mémorisation, et des deuxièmes moyens pour sélectionner automatiquement la ligne de transmission optimale parmi les candidates sur la base des données mémorisées dans lesdits troisièmes moyens de mémorisation.

9. Système de sélection de ligne de transmission selon la revendication 8, caractérisé en ce que lesdits deuxièmes moyens de mémorisation (2) pondèrent chacune des sortes de données mémorisées dans lesdits troisièmes moyens de mémorisation (3) en définissant des priorités pour les sortes de données, et sélectionnent la candidate ayant la priorité la plus élevée comme étant la ligne de transmission optimale.

10. Système de sélection de ligne de transmission selon l'une quelconque des revendications 1 à 9, caractérisé en ce que lesdits moyens de sélection (4) comprennent des moyens pour afficher au moins les candidates pour la ligne de transmission optimale sur la base des données mémorisées dans lesdits premiers, deuxièmes et troisièmes moyens de mémorisation (1 à 3) et des deuxièmes moyens pour sélectionner manuellement la ligne de transmission optimale parmi les candidates affichées.

11. Système de sélection de ligne de transmission selon la revendication 10, caractérisé en ce que lesdits premiers moyens affichent en outre les données mémorisées dans lesdits troisièmes moyens de mémorisation (3) pour chacune des candidates.
